# EUROPEAN PATENT SPECIFICATION

(11) **EP 0 677 464 B1**
(45) Date of publication and mention of the grant of the patent: **16.06.1999**
(21) Application number: 95850068.8
(22) Date of filing: 29.03.1995
(51) Int. Cl.: B65G 65/48, B65D 88/68

(54) **Apparatus for discharging material from a silo or an equivalent container**
Entladevorrichtung für einen Silo oder ähnlichen Behälter
Dispositif de déchargement pour un silo ou conteneur similaire

(30) Priority: 15.04.1994 FI 941755
(43) Date of publication of application: 18.10.1995
(73) Proprietor: SAIMATEC ENGINEERING OY, FIN-57230 Savonlinna (FI)
(72) Inventor: Rasimus, Seppo, FIN-57210 Savonlinna (FI); Tolvanen, Heikki, FIN-57210 Savonlinna (FI)
(74) Representative: Lindgren, Anders

(56) References cited:
- DE-A- 3 342 854
- DE-A- 4 220 035

## Description

The invention relates to an apparatus as defined in the preamble of claim 1 for discharging different kinds of material from a silo or a corresponding container.

Silos are used for the storage of various kinds of bulk material, such as different wood fractions used as raw material for various processes or as fuel in boilers for energy production.

In particular, such materials include unsorted wood waste materials used as fuel, such as bark, screening waste, waste from demolished buildings, knots and other less valuable wood material. Another type of fuel are the so-called forest processed chips, which contain large amounts of unsorted components, such as twigs, needles and pieces of wood.

It is not expedient to grade or homogenize bulk material to be used as fuel because such material will burn in a boiler even if consists of larger particles.

However, this kind of non-uniform mixed material is difficult to handle, and problems are especially encountered in discharging such material from a silo because the material tends to cake together and does not flow down readily by itself and because the longer particles in it cause feed disturbances.

Usually this type of cumbersome material is unloaded from a silo by using linearly operated rake or pole dischargers by which the material in the silo is discharged through a lateral discharge opening for further transport to the site of use.

Dischargers of this type are particularly heavy in structure and need a high operating power because they have to move material simultaneously over the whole area of the silo bottom and "ram" it in one or two directions. Moreover, these systems are disadvantageous in respect of space utilization e.g. because the hydraulic drive requires a large space.

An additional disadvantage with silos of rectangular design is the heavy structure of their flat side walls.

Discharging methods in which the material is discharged through the center of the silo have the disadvantage that the material is moved through convergent holes and complex channels in which nonhomogeneous and setting material tends to cause disturbances as referred to above, which is why such methods are in many cases unusable.

An example of this type of dischargers which discharge the material through the center of the silo is the one presented in DE patent 1133310. It has the disadvantage that the material is discharged into a space convergent towards the center of the silo. Another drawback is that the discharge ring tends to move upwards when close to the silo walls as the ring is rotated by toothing placed on the inside of the ring. These facts are a source of problems in practical work. The same drawbacks are also observed in the apparatus proposed by Finnish patent application FI 832214.

The object of the present invention is to create an expanding free space within the silo to ensure the discharge of any compressed and set material in the silo.

This object is solved by the features defined in the characterising portion of claim 1.

In a preferred embodiment of the invention, the discharge ring is driven by a toothing placed on the circumference of the discharge ring and the ring is retained by its rim to prevent it from rising and provided with a contact to prevent rotation in the same place.

With the apparatus of the invention, the content material is unloaded from under the shell of a round-bottom silo through a ringlike discharge opening placed on or close to the circumference of the silo bottom. The content material moves radially on the silo bottom towards an expanding free space, so that the material, which has been under a pressure in the silo, can now be loosened, thereby ensuring the discharge of any compressed and set material.

The silo discharger of the invention has a low operating power because the material is only handled at a variable discharge point and the material movement inside the silo is as short as possible because of its radial nature.

Using the apparatus of the invention, the material can easily be uniformly discharged from the whole area of the silo bottom. This property permits the material stored in the silo to be handled in a first-in first-out manner, ensuring a uniform retention time. This circumstance is of a decisive importance in cases where the material in the silo is subjected e.g. to thermal or chemical treatment as a function of time (steaming, bleaching etc.).

The content material discharged from a silo using the apparatus of the invention is typically gathered in a collection space provided under the silo bottom, from where the material is conveyed further by known methods.

The collection space under the silo can also advantageously be used for further treatment of the material, e.g. dilution, mixing of chemicals etc. The structure and design of the collection space are adapted to the intended use.

Different versions of the apparatus of the invention can be provided with suitable accessories e.g. for the mixing of materials in the collection space.

Instead of a collection space, further conveyance of the material can also be implemented using a conveyor circulating around the silo bottom, a blast conveyor or the like.

In the following, the invention will be described by the aid of an example, reference being made to the attached drawings, in which
- Fig. 1: presents a simplified view of an embodiment of the apparatus of the invention in vertical section.
- Fig. 2: presents a simplified view of another embodiment of the apparatus of the invention in vertical section.
- Fig. 3: presents the embodiment in Fig. 1 and 2 in horizontal section along line A - A.

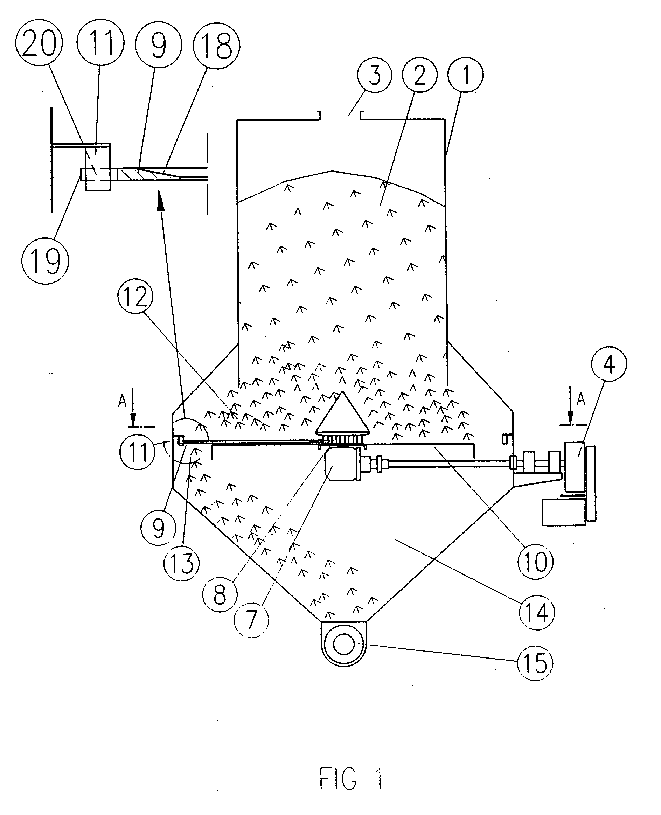

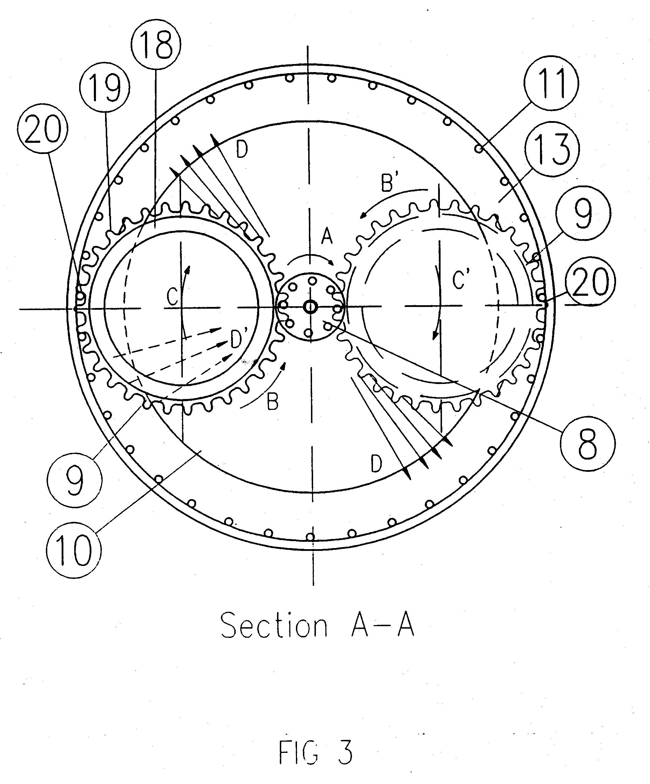

Figures 1, 2 and 3 show a silo 1 used for the storage of content material 2, which is supplied into the silo through an opening 3. The silo has a bottom 10 which is provided with a discharge opening 13, preferably of a ringlike shape. To empty the silo, i.e. to discharge the content material from the silo, one or more discharge rings 9 are rotated by a drive system comprising a drive 4, a power transmission gear 7 and a drive wheel 8 connected to its secondary shaft. The drive wheel 8 is preferably provided with shaft journals and teeth. By rotating the drive wheel 8, the discharge ring 9 is caused to rotate about its own center B and B' and simultaneously to turn about another axis C and C', preferably the vertical axis of the silo.

Placed on or near the radially outermost orbit of the discharge ring(s) 9 is/are one or more support elements which is/are in contact 20 with the discharge ring/discharge rings 9. This prevents the discharge ring/discharge rings 9 from rotating in the same place. The support element 11 is a circular body or the support elements 11 are placed on the circumference of a circle and it is provided with/they are elements adapted to the toothing 19 or equivalent formed on the periphery of the discharge ring/rings 9, such as counter toothings, pins, notches, holes or the like.

An advantageous solution to achieve a contact 20 is to use a counter toothing 11 adapted to the toothing 19 on the circumference of the discharge ring 9. It is also possible to use e.g. a frictional contact between the discharge ring and the ring on the circumference of the silo. The support element/elements 11 is/are placed on the circumference of the silo and are preferably attached to its interior surface or formed as parts of the interior surface. Formed on or attached to the support element is an element which is placed against the top surface of the discharge ring to prevent the latter from rising.

The discharge ring/rings 9 is/are typically provided with a bevelling 18 on the interior edge to permit the material to be more easily passed under it during the backward motion D' The discharge rings 9 are placed on top of the silo bottom 10, preferably in its immediate vicinity or in contact with the bottom (10).

As the discharge ring/rings 9 turns/turn C and C' around the bottom, it/they push the material with its/their outer edge radially D from under the shell 12 of the silo 1 into the discharge opening 13 and further into the collection space 14 and onto a conveyor 15.

The material is uniformly discharged from the entire area of the silo bottom 10 according to the first-in first-out principle. Since the material discharge occurs radially D from under 12 the shell of the silo 1 into a free space 13 at the outer edge, the discharging does not require much work and therefore the power requirement is small as compared with previously known discharging methods used for corresponding materials.

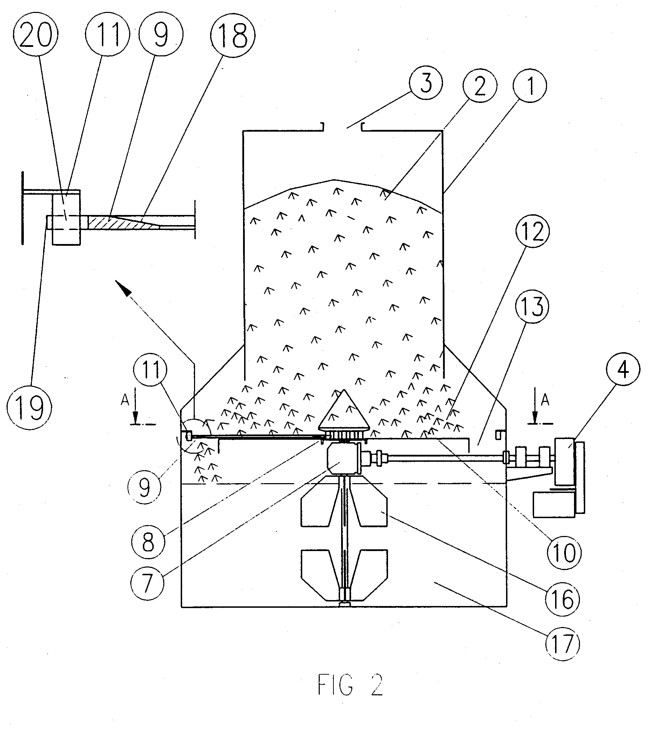

Fig. 2 presents another embodiment in accordance with the invention in which the collection space consists of a mixing container 17. Mounted in the mixing container are mixing elements 16, to which the driving power is transmitted from the drive 4 via the power transmission gear 7. For example, when high-consistency pulp is to be diluted to a consistency suitable for pumping, this embodiment is very useful as the material is discharged uniformly from the entire area of the the silo bottom and the discharging into the mixing container is performed in the manner described above. It is clear from the above examples, e.g. from the solutions presented in Fig. 1, 2 and 3, that the apparatus of the invention has an advantageous structure which enables it to be used in demanding conditions and applications as explained above.

It is obvious to a person skilled in the art that the invention is not restricted to the embodiments described above, but that it may be varied within the scope of the following claims.

## Claims

1. A silo or equivalent container with a discharge mechanism for discharging a material therein through a discharge opening (13) at the bottom (10) of the silo, the discharge mechanism comprising at least one discharge ring (9) mounted to simultaneously rotate about its own centre (B, B') and an axis (C, C') which preferably is parallel to the vertical axis of the silo and at least one support element (11) which is placed on the radially outermost orbit of and in contact (20) with the at least one discharge ring (9) **characterised** in that the at least one discharge ring (9) is arranged to move the material in the silo radially outward (D) toward the discharge opening (13) provided at the outer periphery of the bottom (10) of the silo.

2. Silo with a discharge mechanism according to claim 1, characterised in that the discharge mechanism is provided with drive wheel (8) transmitting rotation to the at least one discharge ring (9).

3. Silo with a discharge mechanism according to claim 1 or 2, characterised in that the support element (11) is of a ring like shape or that support elements (11) are placed on the circumference of a circle and that it has elements adapted to the periphery of the at least one discharge ring (9), the periphery being formed as counter toothings, pins, notches, holes or the like.

4. Silo with a discharge mechanism according to any of claims 1-3, characterised in that the support element (11) is such arranged on the circumference of the silo and preferably attached to the interior surface of the silo or formed as parts of said surface that the contact (20) between the at least one discharge ring (9) and the support element (11) promotes the rotation of the discharge ring (9) about the slewing axis (C, C').

5. Silo with a discharge mechanism according to any of claims 1-4, characterised in that the support element (11) comprises an element formed on or attached to it and placed against the top surface of the at least one discharge ring (9) to prevent it from rising.

6. Silo with a discharge mechanism according to any of claims 2-5, characterised in that the drive wheel (8) is driven by a drive (4) connected to the drive wheel via a power transmission gear (7).

7. Silo with a discharge mechanism according to claim 6, characterised in that mixing elements (16) such as mixing paddles or equivalent devices for material treatment are connected to the secondary shaft of the power transmission gear(7).

8. Silo with a discharge mechanism according to any of claims 1-7, characterised in that the at least one discharge ring (9) is mounted on top of the silo bottom (10), preferably in its immediate vicinity.

9. Silo with a discharge mechanism according to any of claims 1-8, characterised in that the discharge opening (13) at the outer periphery of the bottom (10) of the silo, preferably is a annular discharge opening (13), whose inner edge in the radial direction lies closer to the slewing axis (C, C') of the at least one discharge ring (9) than the radially outermost point of the at least one discharge ring (9).

10. Silo with a discharge mechanism according to any of claims 1-9, characterised in that the at least one discharge ring (9) has a toothing (19) or the like formed on the circumference thereof.

11. Silo with a discharge mechanism according to any of claims 1-10, characterised in that the at least one discharge ring (9) has a bevelling (18) preferably formed on its inner edge.

## Patentansprüche

1. Ein Silo oder vergleichbarer Behälter mit einem Entlademechanismus zum Entladen eines darin befindlichen Materials durch eine Entladeöffnung (13) auf dem Boden (10) des Silos, wobei der Entlademechanismus wenigstens einen Entladering (9) enthält, der so eingebaut ist, daß er gleichzeitig um seinen eigenen Mittelpunkt (B, B') und eine Achse (C, C') rotiert, welche vorzugsweise parallel zu der Vertikalachse des Silos ist, und wenigstens ein Stützelement (11), welches auf dem radial äußersten Kreis von und in Kontakt (20) mit dem wenigstens einen Entladering (9) angeordnet ist,
**dadurch gekennzeichnet,**
daß der zumindest eine Entladering (9) so angeordnet ist, daß er das Material in dem Silo radial auswärts (D) in Richtung der Entladeöffnung (13) bewegt, welche auf der äußeren Peripherie des Bodens (10) des Silos vorgesehen ist.

2. Silo mit einem Entlademechanismus nach Anspruch 1,
**dadurch gekennzeichnet,**
**daß** der Entlademechanismus mit einem Antriebsrad (8) versehen ist, das die Rotation zu dem mindestens einen Entladering (9) überträgt.

3. Silo mit einem Entlademechanismus nach Anspruch 1 oder 2,
**dadurch gekennzeichnet,**
**daß** das Stützelement (11) von einer ringähnlichen Form ist oder daß die Stützelemente (11) auf dem Umfang eines Kreises angeordnet sind und daß es Elemente hat, die an die Peripherie von dem wenigstens einen Entladering (9) angepaßt sind, wobei die Peripherie gebildet ist durch eine Gegenzähnung, Stifte, Kerben, Löcher oder dergleichen.

4. Silo mit Entlademechanismus nach einem der Ansprüche 1 bis 3,
**dadurch gekennzeichnet,**
**daß** das Stützelement (11) so auf dem Umfang des Silos angeordnet und vorzugsweise an der inneren Oberfläche des Silos befestigt oder als Teile der Oberfläche ausgebildet ist, daß der Kontakt (20) zwischen dem wenigstens einen Entladering (9) und dem Stützelement (11) die Drehung des Entladerings (9) um die schwenkende Achse (C, C') fördert.

5. Silo mit einem Entlademechanismus nach einem der Ansprüche 1 bis 4,
**dadurch gekennzeichnet,**
**daß** das Stützelement (11) ein auf ihm ausgebildetes oder an ihm befestigtes und gegen die obere Oberfläche des wenigstens einen Entladerings (9) plaziertes Element aufweist, um diesen am Ansteigen zu hindern.

6. Silo mit einem Entlademechanismus nach einem der Ansprüche 2 bis 5,
**dadurch gekennzeichnet,**
**daß** das Antriebsrad (8) durch einen Antrieb (4) angetrieben ist, der mit dem Antriebsrad mittels eines Kraftübertragungsgetriebes (7) verbunden ist.

7. Silo mit einem Entlademechanismus nach Anspruch 6,
**dadurch gekennzeichnet,**
**daß** Mischelemente (16) wie Mischpaddel oder äquivalente Vorrichtungen zur Materialbehandlung mit der sekundären Welle des Kraftübertragungsgetriebes (7) verbunden sind.

8. Silo mit einem Entlademechanismus nach einem der Ansprüche 1 bis 7,
**dadurch gekennzeichnet,**
**daß** der wenigstens eine Entladering (9) oben auf dem Siloboden (10) befestigt ist, vorzugsweise an seiner unmittelbaren Nachbarschaft.

9. Silo mit einem Entlademechanismus nach einem der Ansprüche 1 bis 8,
**dadurch gekennzeichnet,**
**daß** die Entladeöffnung (13) an dem äußeren Umfang des Silobodens (10) vorzugsweise eine ringförmige Entladeöffnung (13) ist, deren Innenkante in der Radialrichtung dichter an der schwenkenden Achse (C, C') des wenigstens einen Entladerings (9) liegt als der radial äußerste Punkt des wenigstens einen Entladerings (9).

10. Silo mit einem Entlademechanismus nach einem der Ansprüche 1 bis 9,
**dadurch gekennzeichnet,**
**daß** der wenigstens eine Entladering (9) eine Zähnung (19) oder dergleichen auf seinem äußeren Umfang ausgebildet aufweist.

11. Silo mit einem Entlademechnismus nach einem der Ansprüche 1 bis 10,
**dadurch gekennzeichnet,**
**daß** der wenigstens eine Entladering (9) eine Anfasung (18) vorzugsweise auf seiner inneren Kante aufweist.

## Revendications

1. Silo ou récipient équivalent, comprenant un mécanisme de décharge afin de décharger un matériau à l'intérieur du silo à travers une ouverture de décharge (13) au fond (10) du silo, le mécanisme de décharge comprenant au moins une bague de décharge (9) montée de manière à tourner simultanément autour de son propre centre (B, B') et d'un axe (C, C') qui est de préférence parallèle à l'axe vertical du silo, et au moins un élément de support (11) qui est placé sur l'orbite radialement la plus extérieure de ladite au moins une bague de décharge (9) et en contact (20) avec celle-ci, caractérisé en ce que ladite au moins une bague de décharge (9) est agencée de manière à déplacer le matériau dans le silo radialement vers l'extérieur (D) en direction de l'ouverture de décharge (13) prévue à la périphérie extérieure du fond (10) du silo.

2. Silo comprenant un mécanisme de décharge selon la revendication 1, caractérisé en ce que le mécanisme de décharge est pourvu d'une roue motrice (8) qui transmet la rotation vers ladite au moins une bague de décharge (9).

3. Silo comprenant un mécanisme de décharge selon l'une ou l'autre des revendications 1 et 2, caractérisé en ce que l'élément de support (11) a une forme analogue à une bague, ou bien en ce que des éléments de support (11) sont placés sur la circonférence d'un cercle et que ces éléments sont adaptés à la périphérie de ladite au moins une bague de décharge (9), la périphérie étant formée à la manière de dentures complémentaires, de tiges, d'entailles, de perçages, ou similaires.

4. Silo comprenant un mécanisme de décharge selon l'une quelconque des revendications 1 à 3, caractérisé en ce que l'élément de support (11) est agencé de telle manière sur la circonférence du silo, et de préférence attaché sur la surface intérieure du silo ou formé en tant que partie de ladite surface, que le contact (20) entre ladite au moins une bague de décharge (9) et l'élément de support (11) favorise la rotation de la bague de décharge (9) autour de l'axe de rotation (C, C').

5. Silo comprenant un mécanisme de décharge selon l'une quelconque des revendications 1 à 4, caractérisé en ce que l'élément de support (11) comprend un élément formé sur lui-même ou attaché à lui-même et placé contre la surface supérieure de ladite au moins une bague de décharge (9) afin de lui empêcher de se soulever.

6. Silo comprenant un mécanisme de décharge selon l'une quelconque des revendications 2 à 5, caractérisé en ce que la roue motrice (8) est entrainée par un dispositif d'entraînement (4) connecté à la roue motrice via un engrenage de transmission de puissance (7).

7. Silo comprenant un mécanisme de décharge selon la revendication 6, caractérisé en ce que des éléments de mélange (16), tels que des palettes de mélange ou des organes équivalents pour le traitement des matériaux, sont connectés à l'arbre secondaire de l'engrenage de transmission de puissance (7).

8. Silo comprenant un mécanisme de décharge selon l'une quelconque des revendications 1 à 7, caractérisé en ce que ladite au moins une bague de décharge (9) est montée sur le sommet du fond du silo (10), de préférence à son voisinage immédiat.

9. Silo comprenant un mécanisme de décharge selon l'une quelconque des revendications 1 à 8, caractérisé en ce que l'ouverture de décharge (13) à la périphérie extérieure du fond (10) du silo est de préférence une ouverture de décharge annulaire (13), dont la bordure intérieure dans la direction radiale est située plus près de l'axe de rotation (C, C') de ladite au moins une bague de décharge (9) que le point radialement le plus extérieur de ladite au moins une bague de décharge (9).

10. Silo comprenant un mécanisme de décharge selon l'une quelconque des revendications 1 à 9, caractérisé en ce que ladite au moins une bague de décharge (9) comporte une denture (19) ou analogue, formée sur sa circonférence.

11. Silo comprenant un mécanisme de décharge selon l'une quelconque des revendications 1 à 10, caractérisé en ce que ladite au moins une bague de décharge (9) comporte un chanfrein (18) formé de préférence sur sa bordure intérieure.
